# EUROPÄISCHE PATENTSCHRIFT

(11) **EP 2 738 068 B1**
(45) Veröffentlichungstag und Bekanntmachung des Hinweises auf die Patenterteilung: **04.03.2015**
(21) Anmeldenummer: 12008054.4
(22) Anmeldetag: 30.11.2012
(51) Int. Cl.: B62D 21/10, B62D 29/04, B62D 63/02, B60P 3/32

(54) **Straßenfahrzeugchassis und Straßenfahrzeug**
Road vehicle chassis and road vehicle
Châssis de véhicule routier et véhicule routier

(43) Veröffentlichungstag der Anmeldung: 04.06.2014
(73) Patentinhaber: Hymer AG, 88339 Bad Waldsee (DE)
(72) Erfinder: Ehl, Stefan, 88214 Ravensburg (DE)
(74) Vertreter: Otten, Alexander

(56) Entgegenhaltungen:
- EP-A1- 2 520 461
- EP-A2- 2 423 077
- DE-A1- 3 242 564
- DE-A1- 4 133 401

## Beschreibung

Die Erfindung betrifft ein Straßenfahrzeugchassis bzw. ein Straßenfahrzeug gemäß dem Oberbegriff des Anspruchs 1 bzw. 13, 14 oder 15.

Aus der EP 2 423 077 A2 ist ein Straßenfahrzeugchassis bekannt, welches ein vorderes Chassis, ein hinteres Chassis und Flanschmittel umfasst, wobei das vordere Chassis und das hintere Chassis zur Bildung des Straßenfahrzeugchassis unter Zwischenschaltung der Flanschmittel miteinander verbunden sind und wobei das vordere Chassis Vorderradaufhängungsbefestigungsmittel und das hintere Chassis Hinterradaufhängungsbefestigungsmittel umfasst. Bei derartigen Straßenfahrzeugchassis ist das vordere und das hintere Chassis in Metallbauweise ausgeführt. Eine Gewichtsreduzierung ist nur durch die ausschließliche Verwendung teuerer Metalle wie z.B. Aluminium und/oder die konstruktiv und fertigungstechnisch aufwendige Verwendung von Spezialbauteilen möglich.

Es ist Aufgabe der Erfindung, ein Straßenfahrzeugchassis bzw. ein Straßenfahrzeug vorzuschlagen, dessen chassisbedingtes Gewicht gegenüber einem mit in Metallbauweise hergestellten Chassis unter Vermeidung einer Verwendung teurer Leichtmetalle und/oder unter Vermeidung der Anwendung von konstruktiv und fertigungstechnisch aufwendigen Spezialbauteilen signifikant reduziert ist und dessen Chassis einen Mehrwert bezüglich der Ausnutzung des durch das Chassis verbrauchten Chassisraums mit sich bringt.

Diese Aufgabe wird ausgehend von den Merkmalen des Anspruchs 1 bzw. der Ansprüche 13, 14 oder 15 durch die kennzeichnenden Merkmale des Anspruchs 1 bzw. der Ansprüche 13, 14 oder 15 gelöst. In den Unteransprüchen sind vorteilhafte und zweckmäßige Weiterbildungen angegeben.

Bei dem erfindungsgemäßen Straßenfahrzeugchassis ist das hintere Chassis, welches zusammen mit dem vorderen Chassis das Straßenfahrzeugchassis bildet, als Sandwichleichtbauchassis ausgebildet ist, wobei das Sandwichleichtbauchassis mehrere Sandwichplatten umfasst, wobei die Sandwichplatten als Längsträger, Querträger, Obergurt und Untergurt ausgebildet sind, wobei die Sandwichplatten derart miteinander verbunden sind, dass diese eine Raumkonstruktion bilden, wobei diese Raumkonstruktion nach oben durch den Obergurt und nach unten durch den Untergurt begrenzt wird und wobei benachbarte Sandwichplatten miteinander verbunden sind. Durch die Verwendung eine Sandwichraumkonstruktion für das hintere Chassis ist es mit konstruktiv geringem Aufwand und mit kostengünstigen und einfach herzustellenden und zu bearbeitenden Materialien möglich, das Gewicht des Straßenfahrzeugchassis zu reduzieren und die im Chassis entstehenden Freiräume besser nutzbar zu machen, da die Längsträger in Fahrtrichtung vertikal stehend angeordnet sind und da die Querträger quer zur Fahrtrichtung vertikal stehend angeordnet sind und so zwischen dem Obergurt und dem Untergurt geometrische einfache und dadurch gut nutzbare Hohlräume bilden. Kern der Erfindung ist somit einer Gewichtsreduzierung auch die doppelte Ausnutzung eines zwischen dem Obergurt und dem Untergurt liegenden Raums zur Herstellung eines biege- und torsionssteifen Chassis und zur Bildung nutzbarer Hohlräume.

Für die Verbindung benachbarter, insbesondere T-förmig aneinander stoßender oder sich kreuzender Sandwichplatten ist es erfindungsgemäß vorgesehen, diese insbesondere ineinander zu stecken und/oder zu verkleben und/oder insbesondere unter Verwendung von Beschlägen miteinander zu verschrauben. Hierdurch lassen sich einfach und schnell stabile Raumkonstruktionen erstellen.

Erfindungsgemäß umfasst das Sandwichleichtbauchassis wenigstens zwei Längsträger, welche sowohl mit einem der Flanschmittel mit dem vorderen Chassis verbunden sind als auch die Hinterradaufhängungsbefestigungsmittel umfassen, wobei die Hinterradaufhängungsbefestigungsmittel insbesondere als in den Längsträger eingebrachte Bohrungen und/oder als in den Längsträger eingebrachte Gewinde und/oder als an dem Längsträger angeordneten Gewindebolzen und/oder als Klebeverbindung ausgebildet sind. Eine durchgehende Ausführung der Längsträger zwischen den Hauptkrafteinleitungsstellen erleichtert die technische Auslegung der Längsträger, da bei der Auslegung keinerlei Verbindungsstellen berücksichtigt werden müssen.

Erfindungsgemäß ist es weiter vorgesehen, die Raumkonstruktion des hinteren Chassis als selbsttragende Raumkonstruktion auszubilden, wobei diese Raumkonstruktion insbesondere derart ausgebildet ist, dass durch die miteinander verbundenen Sandwichplatten wenigstens drei insbesondere symmetrisch zu einer Fahrzeuglängsachse angeordnete insbesondere quaderförmige Raumzellen gebildet sind, welche in Fahrrichtung insbesondere hintereinander und benachbart zueinander angeordnet sind, wobei eine der Raumzellen insbesondere derart angeordnet ist, dass deren Querträger vor und hinter einem Einbauort für Hinterräder angeordnet sind, wobei die für die Raumkonstruktion verwendeten Sandwichplatten insbesondere eine Plattendicke zwischen 20 mm und 40 mm und vorzugsweise von 25 mm bis 35 mm aufweisen, wobei der Obergurt und der Untergurt zueinander insbesondere einen Abstand von 350 mm bis 450 mm und vorzugsweise von 400 mm bis 430 mm aufweisen und wobei die Längsträger insbesondere eine Länge von 2 m bis 4 m und vorzugsweise von 3 m bis 3,6 m aufweisen. Ein derartiger Aufbau der Raumkonstruktion ist durch seine großvolumigen Raumzellen einfach herstellbar. Weiterhin sind die Raumzellen einer derartigen Raumkonstruktion auf Grund ihrer Anordnung und Größe optimal zusätzlich nutzbar.

Die Erfindung sieht auch vor, mit den Flanschmitteln die Längsträger des hinteren Chassis und die Träger des vorderen Chassis zu verbinden, wobei die Längsträger und die Träger jeweils Verbindungsstellen bilden. Durch den Einsatz von Flanschmitteln sind das vordere Chassis und das hintere Chassis auf einfache Weise zuverlässig verbunden.

Erfindungsgemäß ist das vordere Chassis als Metallchassis ausgebildet. Durch die Verwendung eines herkömmlichen Metallchassis als vorderes Chassis zusammen mit einem als hinteres Chassis ausgeführten Sandwichleichtbauschassis wird ein einfach herstellbares Fahrzeugchassis geschaffen, da lediglich in Vergleich zu dem vorderen Chassis einfachen Strukturen des hinteren Chassis durch eine Sandwichleichtbaukonstruktion ersetzt werden. Ein solches hybrides Fahrzeugchassis integriert auf besonders einfache Weise den Sandwichleichtbau in den Fahrzeugbau.

Weiterhin sieht die Erfindung vor, wenigstens eine Verbindungsstelle des vorderen Chassis als Hohlprofil auszubilden und wenigstens eine Verbindungsstelle des hinteren Chassis durch einen der Längsträger zu bilden, wobei die Verbindung entweder derart erfolgt, dass der Längsträger insbesondere formschlüssig in das Hohlprofil hinein ragt und durch die Flanschmitteln mit dem Hohlprofil verbunden ist oder dass der Längsträger außen an dem Hohlprofil anliegt und durch die Flanschmitteln mit dem Hohlprofil verbunden ist. Hierdurch ist es möglich, vordere Chassis, welche in Metallbauweise für den Zusammenbau mit hinteren Chassis in Metallbauweise ausgeführt sind, auch für ein in Sandwichleichtbausweise ausgeführtes hinteres Chassis zu verwenden.

Die Erfindung sieht auch vor, das hintere Chassis mit wenigstens drei und insbesondere vier Querträgern auszustatten, welche das hintere Chassis quer zur Fahrtrichtung durchlaufen. Hierdurch werden zwei bis drei Raumzellen geschaffen, welche dem hinteren Chassis über seine gesamte Länge eine hohe Biegesteifigkeit und eine hohe Torsionssteifigkeit verleihen.

Weiterhin ist es vorgesehen, wenigstens zwei und insbesondere drei benachbarte Querträger jeweils mit einem Durchbruch auszugestalten und so zwischen dem Obergurt und dem Untergurt einen in Fahrzeuglängsrichtung verlaufenden Tunnel zu bilden. Hierdurch entsteht trotz der Ausbildung des hinteren Chassis mit mehreren Raumzellen zwischen dem Obergurt und dem Untergurt ein flexibel nutzbarer, großer Raum.

Erfindungsgemäß ist es auch vorgesehen, dass das einzelne Flanschmittel zur Verbindung des vorderen Chassis und des hinteren Chassis auch wenigstens ein Knotenblech umfasst, wobei dieses Knotenblech mit dem vorderen Chassis und dem hinteren Chassis verbunden und insbesondere verschraubt ist. Hierdurch ist eine optimale Verbindung der Metallkonstruktion des vorderen Chassis und der Sandwichleichtbaukonstruktion des hinteren Chassis möglich, da das Knotenblech bei entsprechender Ausbildung eine großflächige Ankopplung des hinteren Chassis an das vordere Chassis gewährleistet.

Die Erfindung sieht auch vor, einen Gurtbock zur Anbindung von Sicherheitsgurten für auf dem hinteren Chassis angeordnete Sitzgelegenheiten mit einem der Längsträger und/oder mit einem der Querträger zu verbinden, wobei sich der Gurtbock insbesondere auch mit einem Ausleger an dem Obergurt der Sandwichleichtbaukonstruktion abstützt. Hierdurch ist von dem Gurtbock aus eine Krafteinleitung in unterschiedlich ausgerichtete Ebenen der Sandwichleichtbaukonstruktion und damit eine optimale Verbindung zwischen dem Gurtbock und der Sandwichleichtbaukonstruktion gegeben.

Für die Ausführung des Sandwichleichtbauchassis sind erfindungsgemäß prinzipiell drei unterschiedliche Bauformen vorgesehen. Entsprechend der ersten Bauform ist das Sandwichleichtbauchassis derart ausgebildet, dass der Obergurt in Fahrtrichtung beidseitig seitlich über den Untergurt übersteht, wobei der Obergurt seitlich über die Längsträger übersteht und wobei der Untergurt seitlich mit den Längsträgern bündig abschließt, wobei insbesondere wenigstens einer der Querträger ausschließlich zwischen den Längsträgern verläuft und insbesondere eine Länge von 1,2 m bis 1,4 m und vorzugsweise 1,25 m bis 1,35 m aufweist. Hierdurch ist eine stabile Raumkonstruktion gebildet, welche für den Fahrzeugaufbau unterhalb des seitlich über die Längsträger überstehenden Obergurts eine nachträgliche, den jeweiligen Anforderungen entsprechende Gestaltung erlaubt. Entsprechend der zweiten Bauform steht insbesondere wenigstens einer der Querträger beidseitig über die Längsträger über und weist insbesondere eine Länge von 2 m bis 2,5 m und vorzugsweise eine Länge von 2,2 m bis 2,3 m auf. Hierdurch ist eine Abstützung des Obergurts gegen von oben auf den Obergurt wirkende Belastungen auch in parallel zu der Fahrzeuglängsachse liegenden Randbereichen gewährleistet. Entsprechend der dritte Bauform stehen der Obergurt und der Untergurt beidseitig seitlich über die Längsträger über, wobei insbesondere wenigstens einer der Querträger beidseitig über die Längsträger übersteht und insbesondere eine Länge von 2 m bis 2,5 m und vorzugsweise eine Länge von 2,2 m bis 2,3 m aufweist. Hierdurch entstehen zusätzlich zu den zwischen den Längsträgern angeordneten Raumzellen, weitere Raumzellen, welche die Sandwichleichtbaukonstruktion zusätzlich verstärken.

Die Erfindung sieht auch vor, dass die Flanschmittel wenigstens einen Adapter umfassen, wobei dieser zwischen dem vorderen Chassis und dem hinteren Chassis angeordnet ist. Hierdurch ist es möglich unterschiedliche Strukturen des vorderen und des hinteren Chassis ohne Umbau des vorderen oder des hinteren Chassis aufeinander anzupassen und somit Kosten zu sparen. Weiterhin lässt sich hierdurch auch eine Bauform eines hinteren Chassis mit mehreren Bauformen eines vorderen Chassis kombinieren. Auch die Kombination unterschiedlicher Typen hinterer Chassis mit einem Typ eines vorderen Chassis ist so einfach möglich.

Ein erfindungsgemäßes Straßenfahrzeug umfasst gemäß einer ersten Ausführungsvariante zusätzlich zu einem Straßenfahrzeugchassis nach wenigstens einem der Ansprüche 1 bis 11, einen Motor, der insbesondere als Verbrennungsmotor ausgebildet ist und in dem vorderen Chassis gelagert ist und Vorderräder oder Vorderräder und Hinterräder antreibt. Ein derartiges Fahrzeug lässt sich mit wenig Aufwand mit geringerem Gewicht ausbilden als ein Straßenfahrzeug, bei welchem das hintere Chassis in Metallbauweise ausgeführt ist.

Ein erfindungsgemäßes Straßenfahrzeug umfasst gemäß einer zweiten Ausführungsvariante zusätzlich zu einem Straßenfahrzeugchassis nach wenigstens einem der Ansprüche 1 bis 11, einen Motor, der insbesondere als Verbrennungsmotor ausgebildet ist und in dem hinteren Chassis gelagert ist und Hinterräder oder Hinterräder und die Vorderräder antreibt. Ein derartiges Fahrzeug lässt sich mit geringem Aufwand leichter ausbilden als ein Straßenfahrzeug, bei welchem das hintere Chassis in Metallbauweise ausgeführt ist.

Ein erfindungsgemäßes Straßenfahrzeug mit einem Straßenfahrzeugchassis umfasst gemäß einer weiteren Ausführungsvariante ein Straßenfahrzeug nach Anspruch 12 oder 13 oder ein Straßenfahrzeug mit einem Straßenfahrzeugchassis nach wenigstens einem der Ansprüche 1 bis 11, wobei der Obergurt des hinteren Chassis insbesondere eine Grundfläche eines Wohnraums bildet, wobei Versorgungsaggregate und/oder Behälter insbesondere zwischen dem Obergurt und dem Untergurt in durch die Längsträger und die Querträger begrenzten Raumzellen angeordnet sind, wobei wenigstens eine der Raumzellen insbesondere durch einen Durchbruch in einem der beiden Querträger, welche die Raumzelle begrenzen, zugänglich ist, wobei wenigstens eine der Raumzellen insbesondere durch einen Durchbruch in dem linken Längsträger und insbesondere durch einen Durchbruch in dem rechten Längsträger zugänglich ist, wobei der Obergurt und/oder der Untergurt insbesondere als einteile Sandwichplatte ausgebildet ist bzw. sind, welche entgegen der Fahrtrichtung über Hinterräder des Straßenfahrzeugs übersteht und wobei die Längsträger insbesondere über den vordersten Querträger und/oder über den hintersten Querträger überstehen, wobei ein Überstand über den vordersten Querträger insbesondere wenigstens 20 cm beträgt, wobei ein Überstand über den hintersten Querträger insbesondere wenigstens 20 cm beträgt. Ein derartiges Straßenfahrzeug weist eine Vielzahl der oben genannten Vorteile auf und ist erfindungsgemäß insbesondere als Reisemobile oder Freizeit-Reisemobil ausgeführt.

Im Sinne der Erfindung wird unter einer Raumzelle ein insbesondere quaderförmiger Hohlraum verstanden, welcher durch wenigstens fünf Sandwichplatten und insbesondere durch sechs Sandwichplatten begrenzt ist, welche insbesondere orthogonal zueinander angeordnet sind.

Im Sinne der Erfindung wird unter einem Chassisraum der Raum verstanden, welcher bei einer schalenartigen Ummantelung des Chassis begrenzt wird. Dieser Chassisraum wird zu einem Teil durch das Chassis selbst ausgefüllt und zum anderen Teil durch Hohlräume ausgebildet, welche von dem Chassis begrenzt bzw. umgrenzt werden.

Im Sinne der Erfindung wird unter einer Sandwichplatte eine wenigstens dreilagige Platte verstanden, welche eine Kernlage aus Polypropylen (PP), insbesondere expandiertem Polypropylen (EPP) und eine oberen und eine untere Decklage aus einem Zugfesten Material, insbesondere aus Aluminium umfasst, wobei die aufeinander liegenden Lagen miteinander verbunden, insbesondere verklebt oder verschweißt oder verschmolzen sind. Bei der Sandwichplatte weist die Kernlage eine Dicke auf, welche wenigstens das 10-fache und insbesondere wenigstens das 20-fache einer Dicke der oberen oder der unteren Decklage beträgt, wobei die obere und die untere Decklage insbesondere gleiche Dicken aufweisen.

Im Sinne der Erfindung werden unter einem Flanschmittel nicht nur mechanische Bauteile wie Schrauben und/oder Muttern und/oder Beilagschieben und/oder Knotenbleche verstanden, sondern werden auch Klebeverbindung als Flanschmittel angesehen, welches geeignet sind das vordere Chassis und das hintere Chassis zu verbinden.

Im Sinne der Erfindung werden unter einem Knotenblech metallische oder nichtmetallische Verbindungsbauteile wie zum Beispiel Winkel oder Laschen verstanden, welche mit einem vorderen Chassis und einem hinteren Chassis oder mit einem vorderen Chassis und einem Adapter oder mit einem hinteren Chassis und einem Adapter oder mit einem vorderen Chassis, einem Adapter und einem hinteren Chassis verbunden sind.

Weitere Einzelheiten der Erfindung werden in der Zeichnung anhand von schematisch dargestellten Ausführungsbeispielen beschrieben.

Hierbei zeigt:
- Figur 1 bis 5:: perspektivische Ansichten einer ersten Ausführungsvariante eines Fahrzeugchassis;
- Figur 6a, 6b:: Schnittansichten des in den Figuren 1 bis 5 gezeigten Fahrzeugchassis;
- Figur 7 und 8:: perspektivische Ansichten einer zweiten Ausführungsvariante eines Fahrzeugchassis;
- Figur 9 bis 11:: verschiedene Ansichten einer dritten Ausführungsvariante eines Fahrzeugchassis und
- Figur 12:: eine Seitenansicht einer vierten Ausführungsvariante eines Fahrzeugchassis.

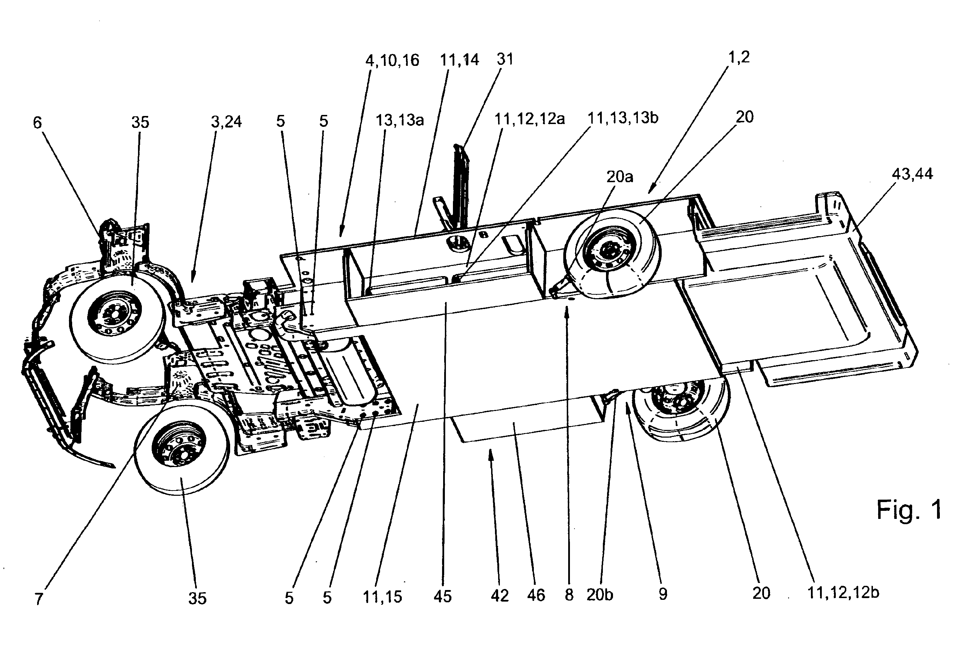

In der Figur 1 ist in perspektivischer Ansicht ein Straßenfahrzeugchassis 1 für ein Reisemobil bzw. ein Freizeit-Reisemobil dargestellt, welches mit Hinterrädern 20 und Vorderrädern 35 bestückt ist. Das Straßenfahrzeugchassis 1 ist in einer Perspektive dargestellt, in welcher der Blick schräg von unten auf einem Unterboden 42 des Straßenfahrzeugchassis 1 fällt. Das Straßenfahrzeugchassis 1, welches auch als Reisemobilchassis 2 bezeichnet wird, umfasst ein vorderes Chassis 3 und ein hinteres Chassis 4. Die beiden Chassisteile 3, 4 sind durch Flanschmittel 5 miteinander verbunden. An der in den Figuren 1 bis 6 dargestellten ersten Ausführungsvariante des Straßenfahrzeugchassis 1 sind einzelne Flanschmittel 5 exemplarisch bezeichnet und als Verschraubungen ausgeführt, welche jeweils eine Schraube und eine Mutter umfassen. Das vordere Chassis 3 ist als Metallchassis 24 ausgebildet und umfasst Vorderradaufhängungsbefestigungsmittel 6, 7 zur Befestigung einer nicht dargestellten Aufhängung für die Vorräder 35. Das hintere Chassis 4 ist in Sandwichleichtbauweise 10 in Form einer Raumkonstruktion 16 ausgeführt und umfasst Hinterradaufhängungsbefestigungsmittel 8, 9 zur Befestigung von Aufhängungen 20a und 20b für die Hinterräder 20. Das hintere Chassis 4 umfasst eine Vielzahl von Sandwichplatten 11, welche miteinander zu der Raumkonstruktion 16 verbunden sind. Von der Raumkonstruktion 16 sind in der Figur 1 zwei Längsträger 12 erkennbar, welche als linker Längsträger 12a und rechter Längsträger 12b ausgeführt sind. Weiterhin sind zwei Querträger 13 erkennbar, welche als erster, vorderster Querträger 13a und zweiter Querträger 13b ausgeführt sind. Die Längsträger 12 und die Querträger 13 sind hochkant stehend zwischen einem Obergurt 14 und einem Untergurt 15 angeordnet. Das Sandwichleichtbauchassis 10 ist durch einen Heckanbau 43 nach hinten verlängert, wobei der Heckanbau 43 als Wanne 44 ausgeführt ist, welche mit wenigstens zwei der Sandwichplatten 11 verschraubt und/oder verklebt ist.

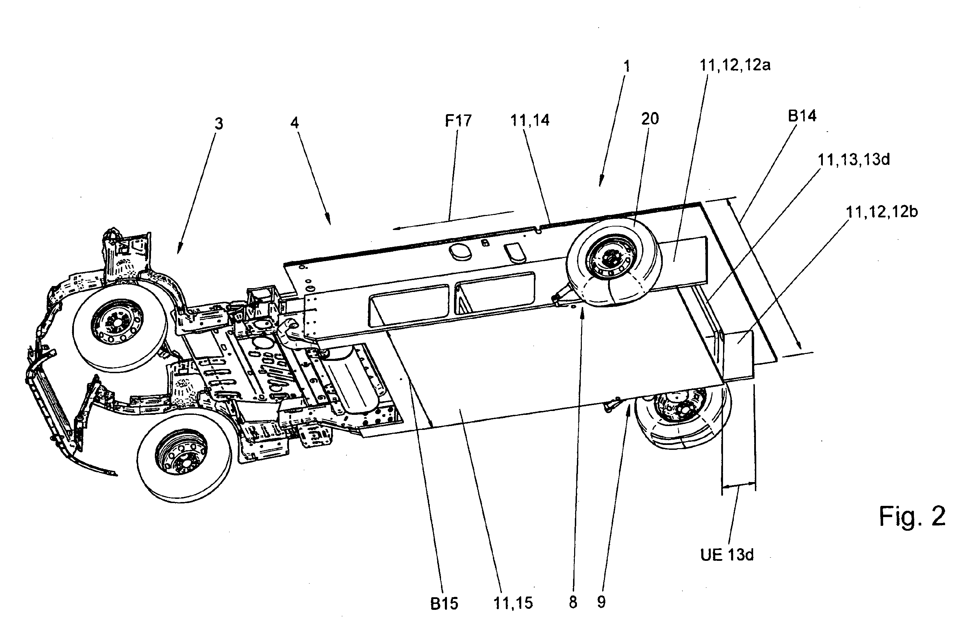

In der Figur 2 ist das in der Figur 1 dargestellte Straßenfahrzeugchassis 1 ohne Heckanbau 43 dargestellt. Weiterhin ist in der Figur 2 auf die Darstellung eines linken Staufachanbaus 45, eines rechten Staufachanbaus 46 und eines Gurtbocks 31 verzichtet worden (siehe Figur 1). In der Figur 2 sind bezüglich des hinteren Chassis 3 somit nur noch diejenigen Sandwichplatten 11 gezeigt, welche tragende Funktionen übernehmen. Zwischen den Längsträgern 12 ist nun auch ein vierter Querträger 13d erkennbar. Entgegen einer Fahrtrichtung F17 stehen die Längsträger 12 bzw. 12a, 12b um einen Überstand UE13d über den hintersten Querträger 13d über. Der Obergurt 14 und der Untergurt 15 weisen eine Breite B14 bzw. B15 auf, wobei der Obergurt 14 quer zu der Fahrtrichtung F17 betrachtet über die beiden Längsträger 12a, 12b und über den Untergurt 15 übersteht. Der Untergurt 15 erstreckt sich entgegen der Fahrtrichtung F17 bis hinter die Hinterradaufhängungsbefestigungsmittel 8, 9, welche im Wesentlichen zwischen den Hinterrädern 20 liegen.

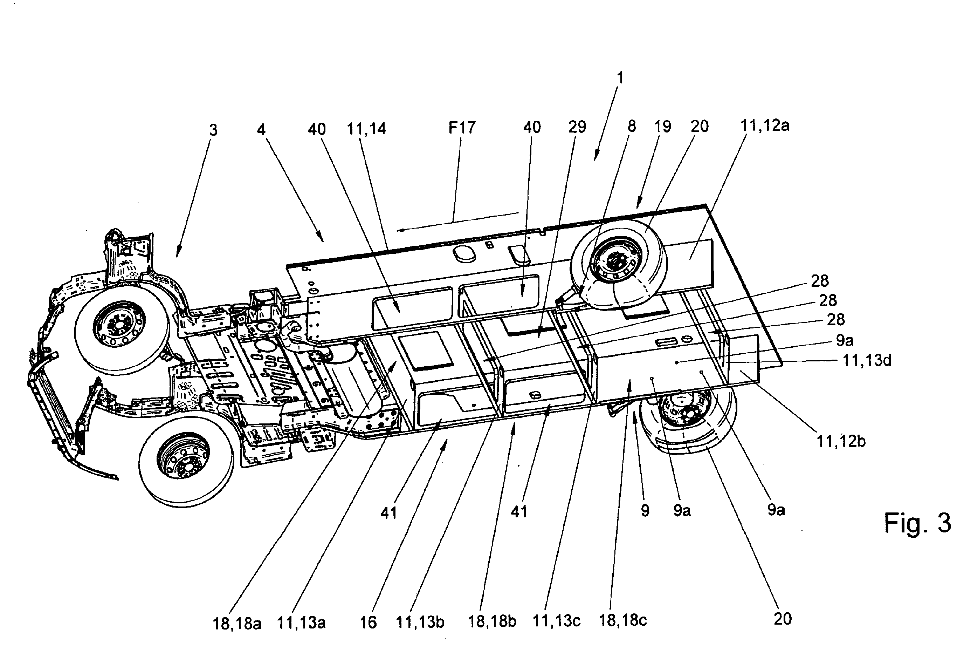

In der Figur 3 ist das Straßenfahrzeugchassis 1 entsprechend der Darstellung der Figur 2 gezeigt, wobei der Untergurt 15 (siehe Figur 2) ausgeblendet ist, um den Blick in das Innere der Raumkonstruktion 16 des hinteren Chassis 4 freizugeben. In der Figur 3 ist erkennbar, wie durch die Sandwichplatten 11 des hinteren Chassis 4 drei quaderförmige Raumzellen 18 bzw. 18a bis 18c gebildet sind. Diese Raumzellen 18 werden durch den nicht dargestellten Untergurt, den Obergurt 14, die bereits erwähnten Querträger 13a, 13b und 13d und einen weiteren Querträger 13c sowie die beiden Längsträger 12a, 12b begrenzt. Die in Fahrtrichtung F17 betrachtet hinterste Raumzelle 18c ist im Bereich der Hinterradaufhängungsbefestigungsmittel 8, 9 ausgebildet, wobei diese unter anderem durch die Querträger 13c und 13d begrenzt wird. Hierbei liegt der dritte Querträger 13c in der Fahrtrichtung F17 betrachtet vor einem Einbauort 19 für die Hinterräder 20 und der vierte bzw. hinterste Querträger 13d liegt in der Fahrtrichtung F17 betrachtet hinter dem Einbauort 19 für die Hinterräder 20. Durch diese Positionierung der hintersten bzw. dritten Raumzelle 18c wird somit für die Befestigung der Hinterräder eine stabile Konstruktion geschaffen. Durch die Raumzellen 18a und 18b, welche in Fahrtrichtung F17 betrachtet vor der dritten Raumzelle 18c liegen, ist das hintere Chassis 4 bis zum vorderen Chassis 3 hin biege- und torsionssteif ausgeführt. In der Figur 3 ist weiterhin erkennbar, dass der zweite, dritte und vierte Querträger 13b, 13c, 13d jeweils einen Durchbruch 28 aufweist. Hierdurch entsteht in der Raumkonstruktion ein Tunnel 29, welcher in Fahrtrichtung F17 bis zu dem ersten Querträger 13a führt. Durch diesen Tunnel 29 ist eine besonders flexible Nutzung der Raumzellen 18 möglich, da sowohl eine Bestückung der Raumzellen durch den Tunnel 29 erfolgen kann als auch Leitungen durch den Tunnel 29 verlegt werden können. Die Nutzbarkeit der Raumzellen 18 wird weiterhin durch Durchbrüche 40 bzw. 41 in dem linken bzw. rechten Längsträger 12a, 12b erhöht. Die Hinterradbefestigungsmittel 9 sind als Bohrungen 9a ausgeführt.

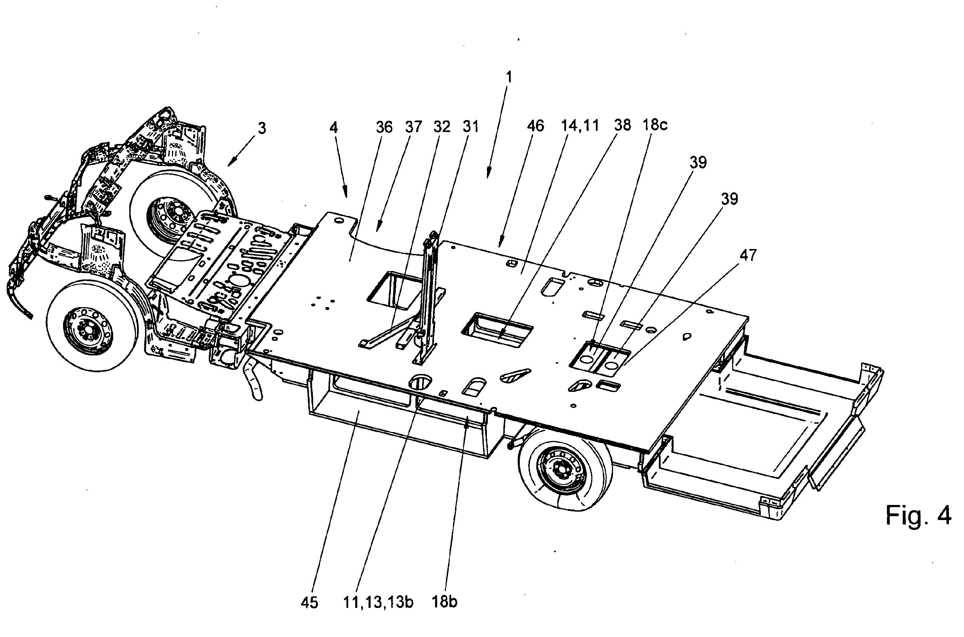

In der Figur 4 ist nun das in der Figur 1 gezeigte Straßenfahrzeugchassis 1 in einer Perspektive von schräg oben dargestellt. In dieser Darstellung ist erkennbar, dass die Sandwichplatte 11, welche den Obergurt 14 bildet, als einteilige Sandwichplatte ausgebildet ist. Durch eine Ausnehmung 47 in dem Obergurt 14 sind Behälter 39 erkennbar, welche in der dritten Raumzelle 18c angeordnet sind. Die Behälter 39 sind als Frischwassertank und als Abwassertank ausgeführt. Der bereits erwähnte Gurtbock 31 stützt sich mit einem Ausleger 32 auf dem Obergurt 14 ab. Zur weiteren Befestigung durchläuft der Gurtbock 31 den Obergurt 14 und ist auch mit dem zweiten Querträger 13b verbunden. Durch die Staufachanbauten 45, 46 ist ein durch die Raumzellen 18a bis 18c zur Verfügung stehender Stauraum erweitert, wobei die Staufachanbauten 45, 46 bei einem auf dem Straßenfahrzeugchassis 1 vollständig aufgebauten Fahrzeug durch Klappen verschließbar sind. Sofern ein derartiges Fahrzeug als Reisemobil bzw. Freizeit-Reisemobil ausgebildet ist, bildet der Obergurt 14 eine Grundfläche 36 eines Wohnraums 37 des Reisefahrzeugs. Die Raumzelle 18b ist entsprechend einer Ausführungsvariante für die Anordnung von Versorgungsaggregaten 38 wie zum Beispiel einer Standheizung vorgesehen. Gemäß einer nicht dargestellter Ausführungsvarianten ist jede einzelne Raumzelle für die Aufnahme von Staugut und/oder einem oder mehreren Tanks und/oder einem oder mehreren Aggregaten vorgesehen, so dass das hintere Chassis flexibel und angepasst an individuelle Anforderungen nutzbar ist. Hierbei ermöglicht dieses Raumzellenkonzept auch eine Änderung der Nutzung wie zum Beispiel eine Nachrüstung von Wassertanks oder eine Ausstattung mit weiteren Aggregaten.

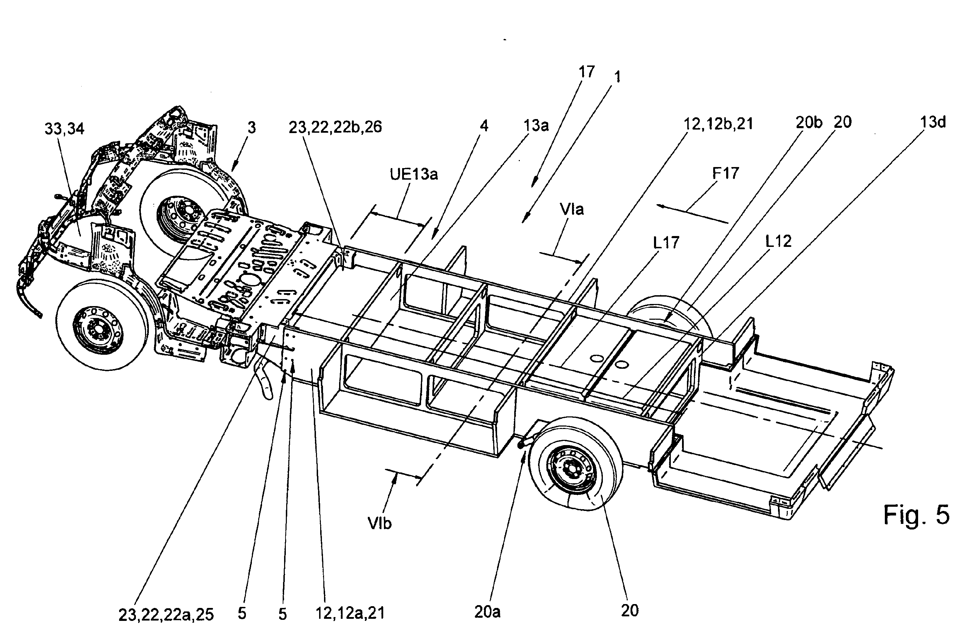

In der Figur 5 ist das Straßenfahrzeugchassis 1 entsprechend der Darstellung der Figur 4 gezeigt, wobei der Obergurt ausgeblendet ist. Hierdurch ist erkennbar, wie das hintere Chassis 4 mit dem vorderen Chassis 3 über seine Längsträger 12a, 12b verbunden ist, wobei die Längsträger 12a, 12b an Träger 22 bzw. 22a, 22b mit Hilfe der Flanschmittel 5 angekuppelt sind. Hierbei bilden die Längsträger 12a, 12b Verbindungsstellen 21 des hinteren Chassis 4 und die Träger 22a, 22b bilden Verbindungsstellen 23 des vorderen Chassis 3. Die Träger 22a und 22b sind jeweils als Hohlprofil 25 bzw. 26 ausgebildet. Die Flanschmittel 5 umfassen Schrauben und Muttern. Weiterhin ist es vorgesehen, als Flanschmittel zusätzlich auch Knotenblech zu verwenden, um eine großflächige Krafteinleitung in die Längsträger zu erreichen. Beim Aufbau eines Straßenfahrzeugs 17 auf der Basis des Straßenfahrzeugchassis 1 wird das vorderen Chassis 3 mit einem Motor 33 ausgestattet (nur symbolisch dargestellt), welcher insbesondere als Verbrennungsmotor 34 ausgebildet ist. Das Fahrzeug 17 weist eine Fahrzeuglängsachse L17 auf, welche das vordere Chassis 3 und das hintere Chassis 4 durchläuft. In die Fahrtrichtung F17 weisen die Längsträger 12 einen Überstand UE13a über den vordersten Querträger 13a und eine Gesamtlänge L12 auf. Gemäß nicht dargestellter Ausführungsvariante sind die Träger 22a und 22b als Flachprofile oder Winkelprofile ausgebildet.

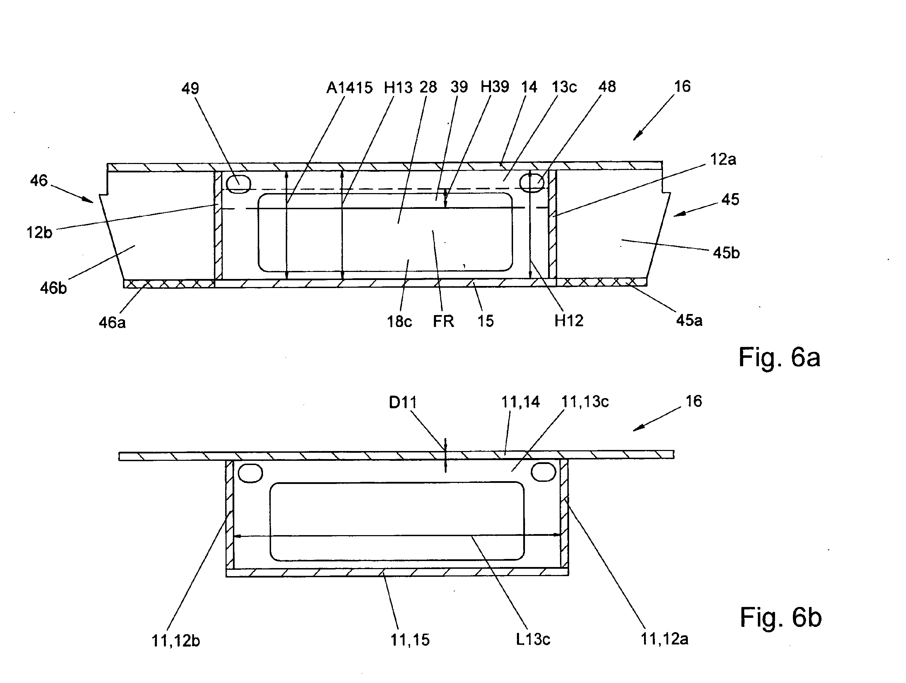

In der Figur 6a ist ein Schnitt durch das hintere Chassis 4 des Straßenfahrzeugchassis 1 entsprechend der in der Figur 5 gezeigten Schnittlinie VIa bis VIa gezeigt, wobei in der Schnittdarstellung auch der Obergurt 14 dargestellt ist. In der Figur 6a ist erkennbar, dass die Längsträger 12a, 12b und der Querträger 13c - genauso wie die nicht sichtbaren anderen Querträger - zwischen dem Obergurt 14 und dem Untergurt 15 verlaufen. Der Obergurt 14 und der Untergurt 15 verlaufen parallel zueinander und weisen zueinander einen Abstand A1415, welcher einer Höhe H12 der Längsträger 12 bzw. einer Höhe H13 der Querträger 13 entspricht. In der Schnittdarstellung der Figur 6a ist von dem linken und rechten Staufachanbau 45, 46 jeweils eine Bodenplatte 45a bzw. 46a und eine Seitenwand 45b, 46b sichtbar, wobei die Bodenplatten 45a, 46a eine Fortsetzung bzw. Verlängerung des Untergurts 15 bilden und wobei die Seitenwände 45b, 46b eine Fortsetzung bzw. Verlängerung des Querträgers 13c bilden, ohne jedoch tragender Bestandteil der Raumkonstruktion 16 zu sein. Zusätzlich zu dem Durchbruch 28 weist der Querträger 13c noch zwei Bohrungen 48, 49 auf, welche zur Durchführung von Leitungen vorgesehen sind. Wie aus der Zusammenschau der Figuren 4, 5 und 6a ersichtlich ist, sind in der dritten Raumzelle 18c die beiden Behälter 39 angeordnet. Um trotz der Anordnung der Behälter 39 in der Raumzelle 18c eine Durchlademöglichkeit von dem vierten Querträger 13d bis zu dem ersten Querträger 13a (siehe Figur 5) beizubehalten, weisen die Behälter 39 eine Höhe H39 auf, welche geringer ist als ein Abstand A1415 zwischen dem Obergurt 14 und dem Untergurt 15 (siehe Figur 6a). Hierdurch verbleibt bei der dargestellten Anordnung unter den Behältern 39 ein Freiraum FR, so dass die Raumzelle 18c zusätzlich als Stauraum nutzbar ist, in welchen beispielsweise Sportgeräte wie Ski und Snowboards eingeschoben werden können. Zur Erhaltung einer optimalen Durchlademöglichkeit unter den Behältern sind die Aufhängungen 20a und 20b für die Hinterräder 20 als Einzelradaufhängungen ausgeführt. Hierdurch wird vermieden, dass eine Achse die Raumzelle 18c durchläuft.

In der Figur 6b ist die Schnittdarstellung der Figur 6a unter Weglassung der beiden Staufachanbauten und der Behälter dargestellt, so dass nur die tragenden Sandwichplatten 11 der Raumkonstruktion 16 gezeigt sind. Alle für die tragende Raumkonstruktion 16 verwendeten Sandwichplatten 11 weisen eine Plattendicke D11 auf. Der Querträger 13c weist - wie alle anderen Querträger - eine Länge L13c auf.

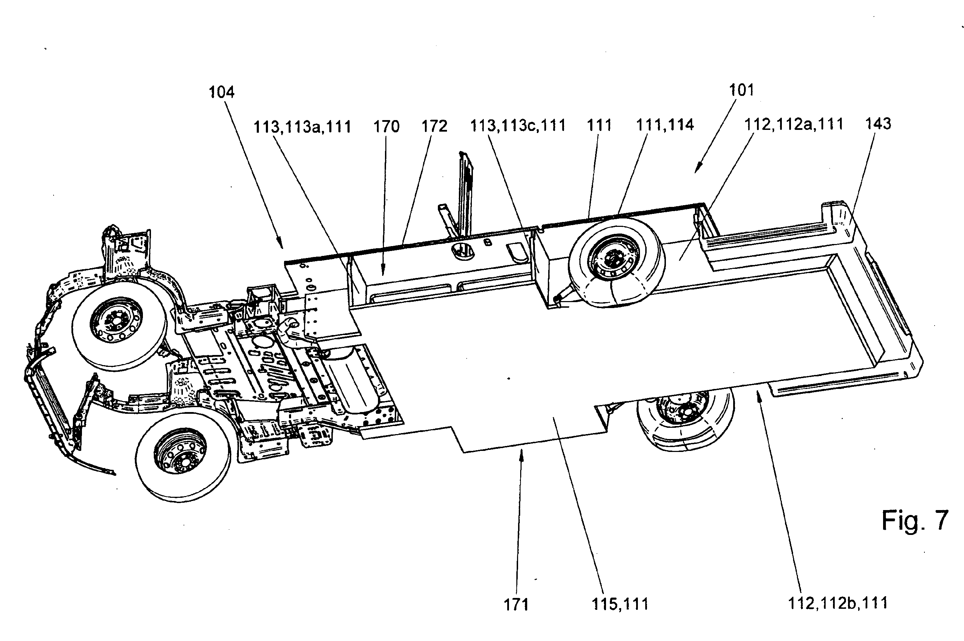

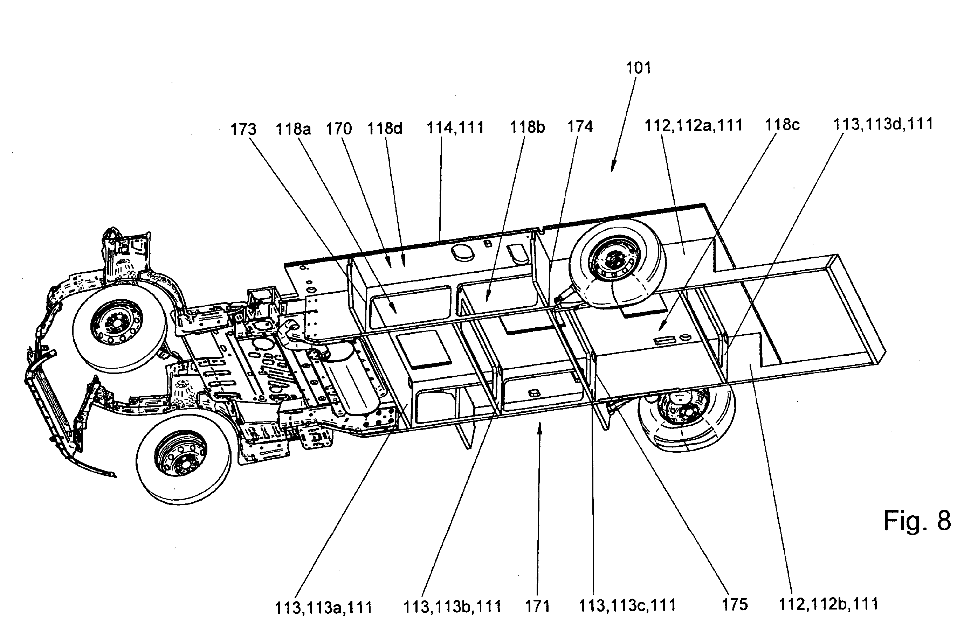

In den Figuren 7 und 8 ist eine zweite Ausführungsvariante eines erfindungsgemäßen Straßenfahrzeugchassis 101 von schräg unten gezeigt. Im Vergleich zur Darstellung der ersten Ausführungsvariante in der Figur 1 ist erkennbar, dass ein Untergurt 115 eines hinteren Chassis 104 bei der zweiten Ausführungsvariante breiter und länger ausgeführt ist und dass Längsträger 112 bzw. 112a, 112b ebenfalls länger ausgeführt sind. Durch diese verlängerte Ausführung tragender Sandwichplatten 111 wird durch diese auch ein Heckanbau 143 abgestützt und kann folglich mit geringerer Steifigkeit und damit kostengünstiger ausgeführt werden. Weiterhin ist hierdurch die Anbindung des Heckanbaus 143 an die Sandwichplatten 111 vereinfacht. Bei der zweiten Ausführungsvariante sind Staufächer 170, 171 durch die tragenden Sandwichplatten 111 gebildet, wobei hierzu ein erster und ein dritter Querträger 113a, 113c von insgesamt vier Querträgern 113 wenigstens nach links oder rechts über die Längsträger 112a, 112b hinaus stehen und einen Obergurt 114 bis zu wenigstens einer seiner Längsseitenkanten 172 unterstützen.

Der Verlauf der Längsträger 112 und der Querträger 113 ist in der Figur 8 erkennbar, welche die Darstellung der Figur 7 bei abgenommenem Untergurt und bei abgenommenem Heckanbau zeigt. Der zweite und der vierte Querträger 113b, 113d verlaufen wie bei der ersten Ausführungsvariante zwischen den Längsträgern 112a und 112b. Die Längsträger 112 bzw. 112a, 112b und Querträger 113 bzw. 113a, 113b sind an Kreuzungsstellen 173, 174, 175 derart ausgebildet, dass sowohl der Längsträger 112 als auch der Querträger 113 einen sich zu dem Obergurt 114 bzw. dem Untergurt 115 öffnenden Schlitz aufweisen, wobei diese beiden Schlitze ein Ineinanderstecken der beiden Sandwichplatten 111 derart erlauben, dass sich die Sandwichplatten 111 zwischen dem Obergurt 114 und dem Untergurt 115 hochkant stehend kreuzen. Zwischen dem ersten und dem dritten Querträger 113a, 113c, dem linken Längsträger 112a, dem Obergurt 114 und dem in der Figur 8 ausgeblendeten Untergurt 115 (siehe Figur 7) ist somit zusätzlich zu drei zwischen den Längsträgern 112a und 112b liegenden Raumzellen 118a, 118b und 118c eine weitere, seitliche neben den Raumzellen 118a und 118b liegende Raumzelle 118d gebildet, welche das hintere Chassis 104 zusätzlich stabilisiert und versteift. Gemäß einer nicht dargestellten Ausführungsvariante ist es vorgesehen, links und/oder rechts neben in der Fahrzeugmitte angeordneten Raumzellen 118a bis 118c jeweils wenigstens zwei weitere Raumzellen anzuordnen.

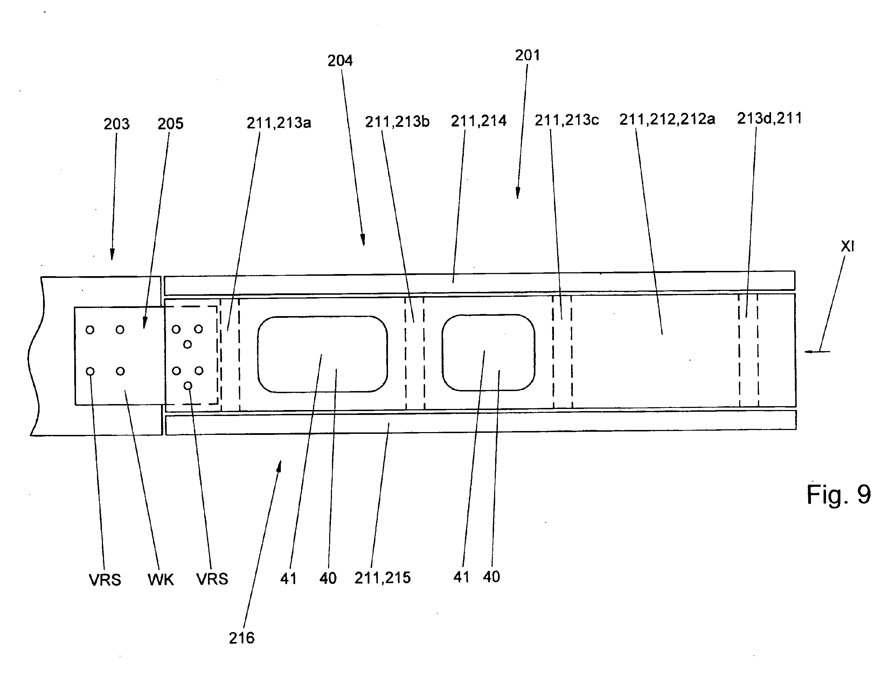

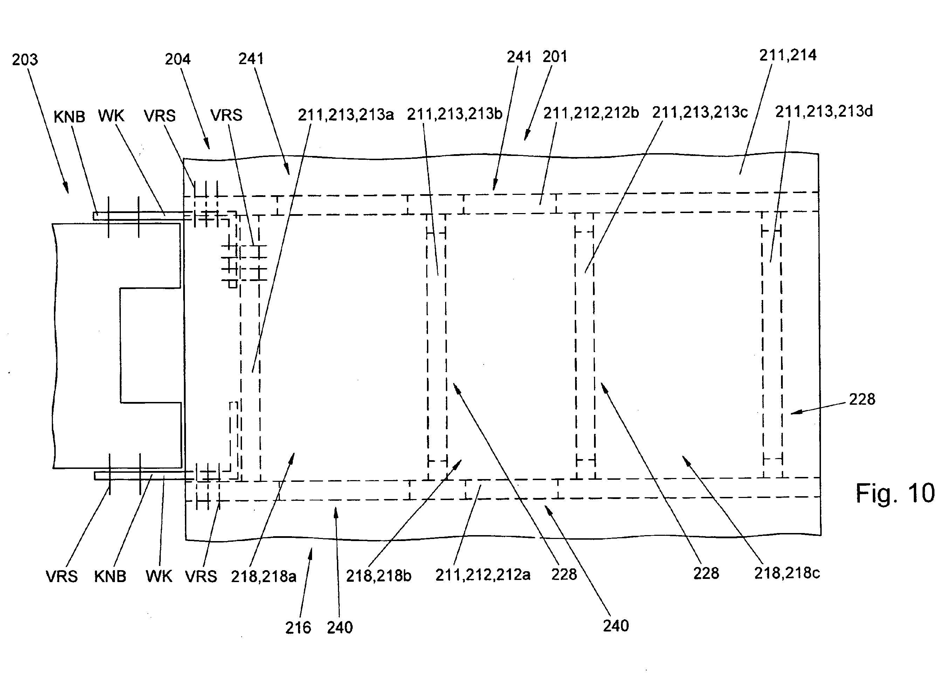

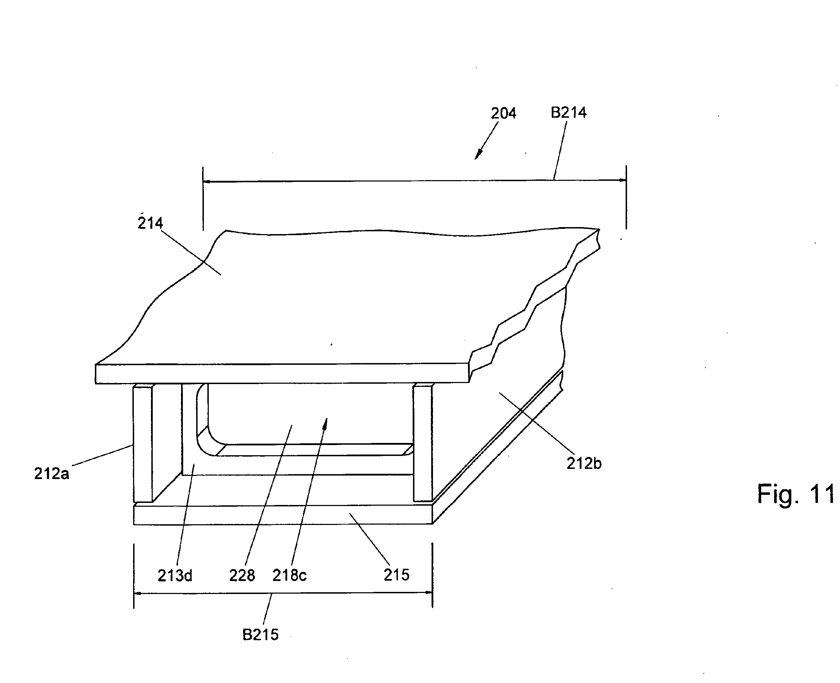

In den Figuren 9 bis 11 sind verschiedene Ansichten einer dritten Ausführungsvariante eines Straßenfahrzeugchassis 201 gezeigt. Hierbei zeigt die Figur 9 eine Seitenansicht auf ein hinteres Chassis 204, welches durch Flanschmittel 205 mit einem nur teilweise dargestellten, vorderen Chassis 203 verbunden ist. Die Flanschmittel 205 umfassen als Knotenbleche KNB Winkel WK und als Befestigungsmittel Verschraubungen VRS (siehe Figuren 9 und 10). Das hintere Chassis 204 umfasst acht Sandwichplatten 211, welche als Obergurt 214, Untergurt 215, zwei Längsträger 212 bzw. 212a und 212b und vier Querträger 213 bzw. 213a bis 213d ausgebildet sind (siehe auch Figur 10). Die Sandwichplatten 211 sind miteinander durch nicht dargestellte Verschraubungen und/oder Verklebungen und/oder formschlüssiges Ineinandergreifen zu einer stabilen Raumkonstruktion 216 verbünden, wobei die Längsträger 212a und 212b Durchbrüche 240 bzw. 241 aufweisen. In einer in der Figur 10 gezeigten Draufsicht auf das Straßenfahrzeugchassis 201 sind neben den Durchbrüchen 240, 241 in den Längsträgern 212 auch Durchbrüche 228 in den hinteren drei Querträgern 213b bis 213d erkennbar. In Folge der Durchbrüche sind zwischen den Sandwichplatten 211 gebildete Raumzellen 218 bzw. 218a bis 218c einfach zugänglich und variabel nutzbar, weiterhin wird durch die Ausbildung der Durchbrüche das Gewicht des hinteren Chassis 204 weiter reduziert. In der Figur 11 ist das hintere Chassis 204 entsprechend der in der Figur 9 gezeigten Pfeillinie XI von hinten in perspektivischer Ansicht gezeigt. In der perspektivischen Ansicht ist der hintere Querträger 213d mit seinem Durchbruch 228 erkennbar, durch welchen die hintere Raumzelle 218c zugänglich ist. In den Figuren 9 bis 11 ist die Sandwichplatte 211, welche den Obergurt 214 bildet, zu ihren Längskanten hin gebrochen dargestellt. Gemäß einer bevorzugten Ausführungsform weist der Obergurt 214 quer zu einer Fahrtrichtung F217 eine Breite B214 auf, welche das 1,2-fache bis 3-fache und insbesondere das 1,5-fache bis 3-fache einer Breite B215 des Untergurts 215 beträgt.

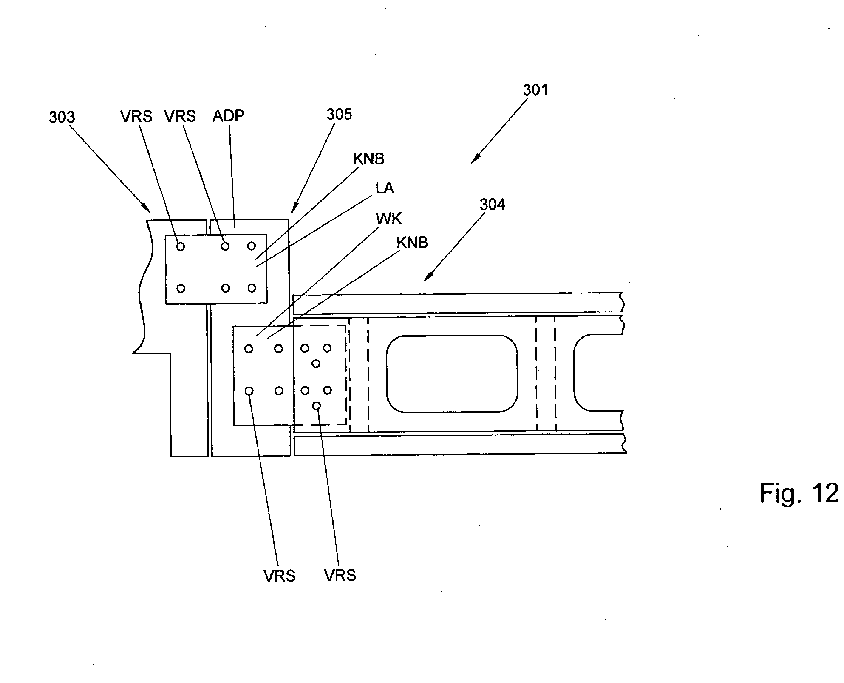

In der Figur 12 ist schließlich noch eine Ausführungsvariante zu dem in den Figuren 9 bis 11 gezeigten Straßenfahrzeugchassis gezeigt. Bei dem gezeigten Straßenfahrzeugchassis 301 umfassen die Flanschmittel 305 einen Adapter ADP, durch welchen ein vorderes Chassis 303 auf ein hinteres Chassis 304 angepasst ist. Die Flanschmittel 305 umfassen für die Anbindung als Knotenbleche KNB weiterhin Winkel WK und Laschen LA sowie als Befestigungsmittel Verschraubungen VRS.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Straßenfahrzeugchassis
- 2: Reisemobilchassis
- 3: vorderes Chassis
- 4: hinteres Chassis
- 5: Flanschmittel zwischen 3 und 4
- 6, 7: Vorderradaufhängungsbefestigungsmittel an 3
- 8, 9: Hinterradaufhängungsbefestigungsmittel an 4
- 9a: Bohrung
- 10: Sandwichleichtbauchassis
- 11: Sandwichplatte
- 12; 12a, 12b: Längsträger
- 13; 13a - 13d: Querträger
- 14: Obergurt
- 15: Untergurt
- 16: Raumkonstruktion
- 17: Straßenfahrzeug
- 18; 18a - 18c: quaderförmige Raumzelle
- 19: Einbauort
- 20: Hinterräder
- 20a: Aufhängung für 20
- 20b: Aufhängung für 20
- 21: Verbindungsstelle
- 22: Träger von 3
- 23: Verbindungsstellen
- 24: Metallchassis
- 25: Hohlprofil
- 26: Hohlprofil
- 27: - bleibt frei -
- 28: Durchbruch in 13
- 29: Tunnel
- 30: - bleibt frei -
- 31: Gurtbock
- 32: Ausleger
- 33: Motor
- 34: Verbrennungsmotor
- 35: Vorderrad
- 36: Grundfläche
- 37: Wohnraum
- 38: Versorgungsaggregat
- 39: Behälter
- 40: Durchbruch in 12a
- 41: Durchbruch in 12b
- 42: Unterboden
- 43: Heckanbau
- 44: Wanne
- 45: Staufachanbau links
- 45a: Bodenplatte von 45
- 45b: Seitenwand von 45
- 46: Staufachanbau rechts
- 46a: Bodenplatte von 46
- 46b: Seitenwand von 46
- 47: Ausnehmung in 14
- 48, 49: Bohrung in 13c

- 101: Straßenfahrzeugchassis
- 104: hinteres Chassis
- 111: Sandwichplatte
- 112: Längsträger
- 112a, 112b: linker, rechter Längsträger
- 113: Querträger
- 113a, 113c: erster, dritter Querträger
- 114: Obergurt
- 115: Untergurt
- 118a - 118d: Raumzelle
- 143: Heckanbau

- 170, 171: Staufach
- 172: Längsseitenkante von 114
- 173 - 175: Kreuzungsstelle

- 201: Straßenfahrzeugchassis
- 203: vorderes Chassis
- 204: hinteres Chassis
- 205: Flanschmittel
- 211: Sandwichplatte
- 212, 212a, 212b: Längsträger
- 213, 213a - 213b: Querträger
- 214: Obergurt
- 215: Untergurt
- 216: Raumkonstruktion
- 218, 218a - 218c: Raumzellen
- 228: Durchbruch
- 240, 241: Durchbruch

- 301: Straßenfahrzeugchassis
- 303: vorderes Chassis
- 304: hinteres Chassis
- 305: Flanschmittel

- ADP: Adapter
- A1415: Abstand zwischen 14 und 15
- B14: Breite von 14
- B15: Breite von 15
- B214: Breite von 214
- B215: Breite von 215
- D11: Plattendicke von 11
- FR: Freiraum unter 39 in 18c
- F17: Fahrtrichtung von 1 bzw. 17
- F217: Fahrtrichtung
- H12: Höhe von 12
- H13: Höhe von 13
- H39: Höhe von 39
- KNB: Knotenblech
- LA: Lasche
- L12: Länge von 12
- L13c: Länge von 13c
- L17: Fahrzeuglängsachse
- UE13a: Überstand von 12 über 13a
- UE13d: Überstand von 12 über 13d
- VRS: Verschraubung
- WK: Winkel

## Patentansprüche

1. Straßenfahrzeugchassis (1; 101; 201; 301) insbesondere Reisemobilchassis (2) und Freizeit-Reisemobilchassis umfassend
- ein vorderes Chassis (3; 203; 303),
- ein hinteres Chassis (4; 104; 204; 304) und
- Flanschmittel (5; 205; 305),
- wobei das vordere Chassis (3; 203; 303) und das hintere Chassis (4; 104; 204; 304) zur Bildung des Straßenfahrzeugchassis (1; 101; 201; 301) unter Zwischenschaltung der Flanschmittel (5; 205; 305) miteinander verbunden sind und
- wobei das vordere Chassis (3; 203; 303) Vorderradaufhängungsbefestigungsmittel (6, 7) und das hintere Chassis (4; 104; 204; 304) Hinterradaufhängungsbefestigungsmittel (8, 9) umfasst,
**dadurch gekennzeichnet,**
- **dass** das hintere Chassis (4; 104; 204; 304) als Sandwichleichtbauchassis (10) ausgebildet ist,
- wobei das Sandwichleichtbauchassis (10) mehrere Sandwichplatten (11; 111; 211) umfasst,
- wobei die Sandwichplatten (11; 111; 211) als Längsträger (12; 112; 212), Querträger (13; 113; 213), Obergurt (14; 114; 214) und Untergurt (15; 115; 215) ausgebildet sind,
- wobei die Sandwichplatten (11; 111; 211) derart miteinander verbunden sind, dass diese eine Raumkonstruktion (16; 216)(16; 216) bilden,
- wobei diese Raumkonstruktion (16; 216) nach oben durch den Obergurt (14; 114; 214) und nach unten durch den Untergurt (15; 115; 215) begrenzt wird und
- wobei benachbarte Sandwichplatten (11; 111; 211) miteinander verbunden sind.

2. Straßenfahrzeugchassis (1; 101; 201; 301) nach Anspruche 1, **dadurch gekennzeichnet, dass** das Sandwichleichtbauchassis (10) wenigstens zwei Längsträger (12; 12a, 12b; 112; 112a, 112b; 212; 212a, 212b) umfasst, die derart ausgebildet sind, dass diese jeweils sowohl mit einem der Flanschmittel (5; 205; 305) mit dem vorderen Chassis (3; 203; 303) verbunden sind als auch die Hinterradaufhängungsbefestigungsmittel (8, 9) umfassen, wobei die Hinterradaufhängungsbefestigungsmittel (8, 9) insbesondere als in den Längsträger (12; 12a, 12b; 112; 112a, 112b; 212; 212a, 212b) eingebrachte Bohrungen (9a) und/oder als in den Längsträger (12; 12a, 12b; 112; 112a, 112b; 212; 212a, 212b) eingebrachte Gewinde und/oder als an dem Längsträger (12; 12a, 12b; 112; 112a, 112b; 212; 212a, 212b) angeordneten Gewindebolzen und/oder als Klebeverbindung ausgebildet sind.

3. Straßenfahrzeugchassis nach einem der vorhergehenden Ansprüche, **dadurch gekennzeichnet,**
- **dass** die Raumkonstruktion (16; 216) des hinteren Chassis (4; 104; 204; 304) als selbsttragende Raumkonstruktion (16; 216) ausgebildet ist,
- wobei diese Raumkonstruktion (16; 216) insbesondere derart ausgebildet ist, dass durch die miteinander verbundenen Sandwichplatten (11; 111; 211) wenigstens drei insbesondere symmetrisch zu einer Fahrzeuglängsachse (L17) angeordnete insbesondere quaderförmige Raumzellen (18; 18a, 18b, 18c; 118; 118a - 118c; 218; 218a - 218c) gebildet sind, welche in Fahrrichtung (F17; F217) insbesondere hintereinander und benachbart zueinander angeordnet sind,
- wobei eine der Raumzellen (18; 18c; 118; 118c; 218; 218c) insbesondere derart angeordnet ist, dass der erste die Raumzelle (18; 18c; 118; 118c; 218; 218c) begrenzende Querträger (13; 113; 213) in Fahrtrichtung (F17; F217) vor einem Einbauort (19) für Hinterräder (20) angeordnet ist und dass der zweite die Raumzelle (18; 18c; 118; 118c; 218; 218c) begrenzende Querträger (13; 113; 213) in Fahrtrichtung (F17; F217) hinter dem Einbauort (19) für die Hinterräder (20) angeordnet ist,
- wobei die für die Raumkonstruktion (16; 216) verwendeten Sandwichplatten (11; 111; 211) insbesondere eine Plattendicke (D11) zwischen 20 mm und 40 mm und vorzugsweise von 25 mm bis 35 mm aufweisen,
- wobei der Obergurt (14; 114; 214) und der Untergurt (15; 115; 215) zueinander insbesondere einen Abstand (A1415) von 350 mm bis 450 mm und vorzugsweise von 400 mm bis 430 mm aufweisen und
- wobei die Längsträger (12; 112; 212) insbesondere eine Länge (L12) von 2 m bis 4 m und vorzugsweise von 3 m bis 3,6 m aufweisen.

4. Straßenfahrzeugchassis nach einem der vorhergehenden Ansprüche, **dadurch gekennzeichnet, dass** die Flanschmittel (5; 205; 305) die Längsträger (12; 112; 212) des hinteren Chassis (4; 104; 204; 304), welche Verbindungsstellen (21) des hinteren Chassis (4; 104; 204; 304) bilden, und Träger (22) des vorderen Chassis (3; 203; 303), welche Verbindungsstellen (23) des vorderen Chassis (3; 203; 303) bilden, verbinden.

5. Straßenfahrzeugchassis nach einem der vorhergehenden Ansprüche, **dadurch gekennzeichnet, dass** das vordere Chassis (3; 203; 303) als Metallchassis (24) ausgebildet ist.

6. Straßenfahrzeugchassis nach einem der vorhergehenden Ansprüche, **dadurch gekennzeichnet, dass** wenigstens eine Verbindungsstelle (23) des vorderen Chassis (3; 203; 303) als Hohlprofil (25, 36) ausgebildet ist und dass wenigstens eine Verbindungsstelle (21) des hinteren Chassis (4; 104; 204; 304) durch einen der Längsträger (12; 112; 212) gebildet ist, wobei der Längsträger (12; 112; 212) derart mit dem Hohlprofil (25, 36) verbunden ist, dass der Längsträger (12; 112; 212) in das Hohlprofil (25, 26) hinein ragt und mit den Flanschmitteln (5; 205; 305) mit dem Hohlprofil (25, 26) verbunden ist oder dass der Längsträger (12; 112; 212) außen an dem Hohlprofil (25, 26) anliegt und mit den Flanschmitteln (5; 205; 305) mit dem Hohlprofil (25, 26) verbunden ist.

7. Straßenfahrzeugchassis nach einem der vorhergehenden Ansprüche, **dadurch gekennzeichnet, dass** das hintere Chassis (4; 104; 204; 304) wenigstens drei und insbesondere vier Querträger (13; 13a - 13d) aufweist, welche das hintere Chassis (4; 104; 204; 304) durchlaufen.

8. Straßenfahrzeugchassis nach Anspruch 7, **dadurch gekennzeichnet, dass** wenigstens zwei und insbesondere drei benachbarte Querträger (13; 13a - 13d); 113; 113a - 113d) jeweils einen Durchbruch (28; 228) aufweisen, so dass zwischen dem Obergurt (14; 114; 214) und dem Untergurt (15; 115; 215) ein in Fahrzeuglängsrichtung (F17; F217) verlaufender Tunnel (29) gebildet ist.

9. Straßenfahrzeugchassis nach einem der vorhergehenden Ansprüche, **dadurch gekennzeichnet, dass** das einzelne Flanschmittel (5; 205; 305) zur Verbindung des vorderen Chassis (3; 203; 303) und des hinteren Chassis (4; 104; 204; 304) wenigstens ein Knotenblech (KNB) umfasst, wobei das Knotenblech (KNB) mit dem vorderen Chassis (3; 203; 303) und dem hinteren Chassis (4; 104; 204; 304) verbunden und insbesondere verschraubt ist.

10. Straßenfahrzeugchassis nach einem der vorhergehenden Ansprüche, **dadurch gekennzeichnet, dass** ein Gurtbock (31) mit einem der Längsträger (12; 112; 212) und/oder einem der Querträger (13; 113; 213) verbunden ist und sich insbesondere mit einem Ausleger (32) an dem Obergurt (14; 114; 214) abstützt.

11. Straßenfahrzeugchassis nach einem der vorhergehenden Ansprüche, **dadurch gekennzeichnet, dass** das Sandwichleichtbauchassis (10)
- entweder derart ausgebildet ist, dass der Obergurt (14; 114; 214) in Fahrtrichtung (F17; F217) beidseitig seitlich über den Untergurt (15; 115; 215) übersteht, wobei der Obergurt (14; 114; 214) seitlich über die Längsträger (12; 112; 212) übersteht und
- wobei der Untergurt (15; 115; 215) seitlich mit den Längsträgern (12; 112; 212) bündig abschließt, wobei insbesondere wenigstens einer der Querträger (13; 113; 213) ausschließlich zwischen den Längsträgern (12; 112; 212) verläuft und insbesondere eine Länge (L13) von 1,2 m bis 1,4 m und vorzugsweise 1,25 m bis 1,35 m aufweist oder
- wobei insbesondere wenigstens einer der Querträger (13; 113; 213) beidseitig über die Längsträger (12; 112; 212) übersteht und insbesondere eine Länge (L13) von 2 m bis 2,5 m und vorzugsweise eine Länge (L13) von 2,2 m bis 2,3 m aufweist
- oder derart ausgebildet ist, dass der Obergurt (14; 114; 214) und der Untergurt (15; 115; 215) beidseitig seitlich über die Längsträger (12; 112; 212) überstehen, wobei insbesondere wenigstens einer der Querträger (13; 113; 213) beidseitig über die Längsträger (12; 112; 212) übersteht und insbesondere eine Länge (L13) von 2 m bis 2,5 m und vorzugsweise eine Länge (L13) von 2,2 m bis 2,3 m aufweist.

12. Straßenfahrzeugchassis nach einem der vorhergehenden Ansprüche, **dadurch gekennzeichnet, dass** die Flanschmittel (305) wenigstens einen Adapter (ADP) umfassen, welcher zwischen dem vorderen Chassis (303) und dem hinteren Chassis (305) angeordnet ist.

13. Straßenfahrzeug (17), **dadurch gekennzeichnet, dass** das Straßenfahrzeug (17) ein Straßenfahrzeugchassis (1; 101; 201; 301) nach wenigstens einem der Ansprüche 1 bis 11 umfasst und dass das Straßenfahrzeug (17) einen Motor (33), insbesondere einen Verbrennungsmotor (34) umfasst, welcher in dem vorderen Chassis (3; 203; 303) gelagert ist und Vorderräder (35) oder Vorderräder (35) und Hinterräder (20) antreibt.

14. Straßenfahrzeug (17), **dadurch gekennzeichnet, dass** das Straßenfahrzeug (17) ein Straßenfahrzeugchassis (1; 101; 201; 301) nach wenigstens einem der Ansprüche 1 bis 12 umfasst und dass das Straßenfahrzeug einen Motor (33), insbesondere einen Verbrennungsmotor (34) umfasst, welcher in dem hinteren Chassis (4; 104; 204; 304) gelagert ist und Hinterräder (20) oder Hinterräder (20) und die Vorderräder (35) antreibt.

15. Straßenfahrzeug (17) mit einem Straßenfahrzeugchassis (1; 101; 201; 301), **dadurch gekennzeichnet, dass** das Straßenfahrzeug (17) nach Anspruch 13 oder 14 ausgebildet ist oder dass das Straßenfahrzeug (17) ein Straßenfahrzeugchassis (1; 101; 201; 301) nach wenigstens einem der Ansprüche 1 bis 12 umfasst,
- wobei der Obergurt (14; 114; 214) des hinteren Chassis (4; 104; 204; 304) insbesondere eine Grundfläche (36) eines Wohnraums (37) bildet,
- wobei Versorgungsaggregate (38) und/oder Behälter (39) insbesondere zwischen dem Obergurt (14; 114; 214) und dem Untergurt (15; 115; 215) in durch die Längsträger (12; 112; 212) und die Querträger (13; 113; 213) begrenzten Raumzellen (18) angeordnet sind,
- wobei wenigstens eine der Raumzellen (18) insbesondere durch einen Durchbruch (28; 228) in einem der beiden Querträger (13; 113; 213), welche die Raumzelle (18) begrenzen, zugänglich ist,
- wobei wenigstens eine der Raumzellen (18) insbesondere durch einen Durchbruch(40; 240) in dem linken Längsträger (12; 12a; 212a) und insbesondere durch einen Durchbruch (41; 241) in dem rechten Längsträger (12; 12b) zugänglich ist,
- wobei der Obergurt (14; 114; 214) und/oder der Untergurt (15; 115; 215) insbesondere als einteile Sandwichplatte (11; 111; 211) ausgebildet ist bzw. sind, welche entgegen der Fahrtrichtung (F17; F217) über Hinterräder (20) des Straßenfahrzeugs übersteht,
- wobei die Längsträger (12; 112; 212) insbesondere über den vordersten Querträger (13a) und/oder über den hintersten Querträger (13d) überstehen, wobei ein Überstand (UE13a) über den vordersten Querträger (13a) insbesondere wenigstens 20 cm beträgt, wobei ein Überstand (UE13d) über den hintersten Querträger (13d) insbesondere wenigstens 20 cm beträgt.

## Claims

1. Chassis of a road vehicle (1, 101, 201, 301), in particular motor home chassis (2) and recreational vehicle chassis, comprising
- a front chassis (3, 203, 303);
- a rear chassis (4, 104, 204, 304); and
- flanges (5, 205, 305),
- whereby the front chassis (3, 203, 303) and the rear chassis (4, 104, 204, 304) are connected via the flanges (5, 205, 305) in order to form the road vehicle chassis (1, 101, 201, 301), and
- whereby the front chassis (3, 203, 303) comprises front suspension fastening means (6, 7), and the rear chassis (4, 104, 204, 304) comprises rear suspension fastening means (8, 9),
**characterised in that**
- the rear chassis (4, 104, 204, 304) is formed as a lightweight sandwich chassis (10),
- whereby the lightweight sandwich chassis (10) comprises several sandwich plates (11, 111, 211),
- whereby the sandwich plates (11, 111, 211) are formed as longitudinal beams (12, 112, 212), crossbeams (13, 113, 213), upper flanges (14, 114, 214), and lower flanges (15, 115, 215),
- whereby the sandwich plates (11, 111,211) are connected such that they form a spatial construction (16, 216) (16, 216),
- whereby this spatial construction (16, 216) is delimited on top by the upper flange (14, 114, 214) and on the bottom by the lower flange (15, 115, 215), and
- whereby adjacent sandwich plates (11, 111, 211) are connected.

2. Road vehicle chassis (1, 101, 201, 301) according to claim 1, **characterised in that** the lightweight sandwich chassis (10) comprises at least two longitudinal beams (12, 12a, 12b, 112, 112a, 112b, 212, 212a, 212b) that are formed such that they are each connected both with one of the flanges (5, 205, 305), and with the front chassis (3, 203, 303), and also comprise the rear suspension fastening means (8, 9), whereby the rear suspension fastening means (8, 9) are formed, in particular, as holes (9a) in the longitudinal beam (12, 12a, 12b, 112, 112a, 112b, 212, 212a, 212b) and/or as threads in the longitudinal beam (12, 12a, 12b, 112, 112a, 112b, 212, 212a, 212b), and/or as threaded bolts on the longitudinal beam (12, 12a, 12b, 112, 112a, 112b, 212, 212a, 212b), and/or as an adhesive bond.

3. Road vehicle chassis according to any of the foregoing claims, **characterised in that**
- the spatial construction (16, 216) of the rear chassis (4, 104, 204, 304) is formed as a self-supporting spatial construction (16, 216),
- whereby this spatial construction (16, 216) is formed, in particular, such that at least three compartments (18, 18a, 18b, 18c, 118, 118a - 118c, 218, 218a - 218c), in particular rectangular compartments, arranged, in particular, symmetrically to a longitudinal axis of the vehicle (L17) are formed by the connected sandwich plates (11, 111, 211), which compartments are arranged, in particular, so as to be adjacent, one behind the other in the direction of travel (F17, F217),
- whereby one of the compartments (18, 18c, 118, 118c, 218, 218c) is arranged in particular such that the first crossbeam (13, 113, 213) delimiting the compartment (18, 18c, 118, 118c, 218, 218c) is arranged in front of an installation site (19) for rear wheels (20) in the direction of travel (F17, F217), and that the second crossbeam (13, 113, 213) delimiting the compartment (18, 18c, 118, 118c, 218, 218c) is arranged behind the installation site (19) for the rear wheels (20) in the direction of travel (F17, F217),
- whereby the sandwich plates (11, 111, 211) used for the spatial construction (16, 216) have, in particular, a thickness (D11) between 20 and 40 mm, and preferably of 25 mm - 35 mm,
- whereby the upper flange (14,114, 214) and the lower flange (15,115, 215) are, in particular, spaced apart at a distance (A1415) of 350 - 450 mm, preferably 400 mm - 430 mm, and
- whereby the longitudinal beams (12, 112, 212) have, in particular, a length (L12) of 2 - 4 m, and preferably of 3 - 3.6 m.

4. Road vehicle chassis according to any of the foregoing claims, **characterised in that** the flanges (5, 205, 305) connect the longitudinal beams (12, 112, 212) of the rear chassis (4, 104, 204, 304) that form points of connection (21) of the rear chassis (4, 104, 204, 304) and supports (22) of the rear chassis (3, 203, 303) that form points of connection (23) of the front chassis (3, 203, 303).

5. Road vehicle chassis according to any of the foregoing claims, **characterised in that** the front chassis (3, 203, 303) is formed as a metal chassis (24).

6. Road vehicle chassis according to any of the foregoing claims, **characterised in that** at least one point of connection (23) of the front chassis (3, 203, 303) is formed as a hollow profile (25, 36), and that at least one point of connection (21) of the rear chassis (4, 104, 204, 304) is formed by one of the longitudinal beams (12, 112, 212), whereby the longitudinal beam (12, 112, 212) is connected with the hollow profile (25, 36) such that the longitudinal beam (12, 112, 212) protrudes into the hollow profile (25, 26) and is connected with the flanges (5, 205, 305) with the hollow profile (25, 26), or that the longitudinal beam (12, 112, 212) abuts the hollow profile (25, 26) on the outside and is connected with the flanges (5, 205, 305) with the hollow profile (25, 26).

7. Road vehicle chassis according to any of the foregoing claims, **characterised in that** the rear chassis (4, 104, 204, 304) has at least three, in particular four, crossbeams (13, 13a - 13d) that pass through the rear chassis (4, 104, 204, 304).

8. Road vehicle chassis according to claim 7, **characterised in that** at least two and, in particular, three adjacent crossbeams (13,13a - 13d, 113, 113a - 113d) each have a perforation (28, 228), such that a tunnel (29) running in the longitudinal direction of the vehicle (F17, F217) is formed between the upper flange (14, 114, 214) and the lower flange (15, 115, 215).

9. Road vehicle chassis according to any of the foregoing claims, **characterised in that** the individual flanges (5, 205, 305) has at least one gusset (KNB) to connect the front chassis (3, 203, 303) and the rear chassis (4, 104, 204, 304), whereby the gusset (KNB) is connected, in particular screwed together, with the front chassis (3, 203, 303) and the rear chassis (4, 104, 204, 304).

10. Road vehicle chassis according to any of the foregoing claims, **characterised in that** a belt trestle (31) is connected with one of the longitudinal beams (12, 112, 212), and/or one of the crossbeams (13,113, 213), and is supported, in particular by the upper flange (14, 114, 214) by means of a cantilever (32).

11. Road vehicle chassis according to any of the foregoing claims, **characterised in that** the lightweight sandwich chassis (10)
- is either formed such that the upper flange (14, 114, 214) protrudes on both sides laterally beyond the lower flange (15, 115, 215) in the direction of travel (F17, F217), whereby the upper flange (14, 114, 214) protrudes laterally beyond the longitudinal beams (12, 112, 212), and
- whereby the lower flange (15, 115, 215) is laterally flush with the longitudinal beams (12, 112, 212), whereby, in particular, at least one of the crossbeams (13, 113, 213) runs exclusively between the longitudinal beams (12, 112, 212) and in particular has a length (L13) of 1.2 - 1.4 m, preferably 1.25 - 1.35 m, or
- whereby, in particular, at least one of the crossbeams (13, 113, 213) protrudes on both sides beyond the longitudinal beams (12, 112, 212), and has, in particular, a length (L13) of 2 - 2.5 m, and preferably of 2.2 - 2.3 m,
- or is formed such that the upper flange (14, 114, 214) and the lower flange (15, 115, 215) protrude on both sides beyond the longitudinal beams (12, 112, 212), whereby, in particular, at least one of the crossbeams (13, 113, 213) protrudes on both sides beyond the longitudinal beams (12, 112, 212), and in particular has a length (L13) of 2 - 2.5 m, preferably 2.2 - 2.3 m.

12. Road vehicle chassis according to any of the foregoing claims" **characterised in that** the flanges (305) comprise at least one adapter (ADP) that is arranged between the front chassis (303) and the rear chassis (305).

13. Road vehicle (17), **characterised in that** the road vehicle (17) comprises a road vehicle chassis (1, 101, 201, 301) according to at least one of claims 1 - 11, and that the road vehicle (17) comprises an engine (33), in particular an internal combustion engine (34) that is mounted in the front chassis (3, 203, 303) and drives front wheels (35) or front wheels (35) and rear wheels (20).

14. Road vehicle (17), **characterised in that** the road vehicle (17) comprises a road vehicle chassis (1, 101, 201, 301) according to at least one of claims 1 - 12, and that the road vehicle (17) comprises an engine (33), in particular an internal combustion engine (34) that is mounted in the rear chassis (4, 104, 204, 304) and drives rear wheels (20) or rear wheels (20) and front wheels (35).

15. Road vehicle (17) having a road vehicle chassis (1, 101, 201, 301), **characterised in that** the road vehicle (17) is formed according to claim 13 or 14, or that the road vehicle (17) comprises a road vehicle chassis (1,101, 201, 301) according to at least one of claims 1 - 12,
- whereby the upper flange (14, 114, 214) of the rear chassis (4, 104, 204,304) in particular forms a base (36) of a living area (37),
- whereby supply units (38) and/or containers (39) are arranged, in particular, between the upper flange (14, 114, 214) and the lower flange (15, 115,215) in compartments (18) delimited by the longitudinal beams (12, 112, 212) and crossbeams (13, 113, 213),
- whereby at least one of the compartments (18) is accessible in particular via a perforation (28, 228) in one of the two crossbeams (13, 113, 213) that delimit the compartment (18),
- whereby at least one of the compartments (18) is accessible in particular via a perforation (40, 240) in the left longitudinal beam (12, 12a, 212a), in particular via a perforation (41,214) in the right longitudinal beam (12, 12b),
- whereby the upper flange (14, 114, 214) and/or the lower flange (15, 115, 215) are formed, in particular, as a one-piece sandwich plate (11, 111, 211) protruding beyond rear wheels (20) of the road vehicle against the direction of travel (F17, F217),
- whereby the longitudinal beams (12, 112, 212) protrude, in particular, beyond the foremost crossbeam (13a) and/or the rearmost crossbeam (13d), whereby a protrusion (UE13a) beyond the foremost crossbeam (13a) is in particular at least 20 cm, whereby a protrusion (UE13d) beyond the rearmost crossbeam (13d) is in particular at least 20 cm.

## Revendications

1. Châssis de véhicule routier (1 ; 101 ; 201 ; 301), plus particulièrement châssis de camping-car (2) et châssis de camping-car de loisirs comprenant :
- un châssis avant (3 ; 203 ; 303),
- un châssis arrière (4 ; 104 ; 204 ; 304) et des moyens de bridage (5 ;205 ; 305)
- le châssis avant (3 ; 203 ; 303) et le châssis arrière (4 ; 104 ; 204 ; 304) étant reliés afin de former le châssis de véhicule routier (1 ; 101 ; 201 ; 301) à l'aide des moyens de bridage (5 ; 205 ; 305) et
- le châssis avant (3 ; 203 ; 303) comprenant des moyens de fixation de suspensions de roues avant (6, 7) et le châssis arrière (4 ; 104 ; 204 ; 304) comprenant des moyens de fixation de suspensions de roues arrière (8, 9),
**caractérisé en ce que**
- le châssis arrière (4 ; 104 ; 204 ; 304) est conçu comme un châssis léger à structure sandwich (10),
- le châssis léger à structure sandwich (10) comprenant plusieurs panneaux sandwich (11 ; 111 ; 211),
- les panneaux sandwich (11 ; 111 ; 211) étant conçus comme des supports longitudinaux (12 ; 112 ; 212), des supports transversaux (13 ; 113 ; 213), une membrure supérieure (14 ; 114 ; 214) et une membrure inférieure (15 ; 115 ; 215),
- les panneaux sandwich (11 ; 111 ; 211) étant reliés entre eux de façon à former une structure spatiale (16 ; 216),
- cette structure spatiale (16 ; 216) étant limitée vers le haut par la membrure supérieure (14 ; 114 ; 214) et vers le bas par la membrure inférieure (15 ; 115 ; 215) et
- des panneaux sandwich (11 ; 111 ; 211) adjacents étant reliés entre eux.

2. Châssis de véhicule routier (1 ; 101 ; 201 ; 301) selon la revendication 1, **caractérisé en ce que** le châssis à structure sandwich (10) comprend au moins deux supports longitudinaux (12 ; 12a ; 12b ; 112 ; 112a ; 112b ; 212 ; 212a ; 212b) conçus de façon à être reliés, à l'aide d'un des moyens de bridage (5 ; 205 ; 305), avec le châssis avant (3 ; 203 ; 303) et qui comprennent les moyens de fixation de suspensions des roues arrière (8, 9), les moyens de fixation de suspensions des roues arrière (8, 9) étant conçus plus particulièrement comme des alésages (9a) réalisés dans les supports longitudinaux (12 ; 12a ; 12b ; 112 ; 112a ; 112b ; 212 ; 212a ; 121b) et/ou comme un filetage réalisé dans les supports longitudinaux (12 ; 12a ; 12b ; 112 ; 112a ; 112b ; 212 ; 212a ; 212b) et/ou comme une tige filetée et/ou comme une liaison par collage disposée sur le support longitudinal (12 ; 12a ; 12b ; 112; 112a; 112b; 212; 212a; 212b).

3. Châssis de véhicule routier (1 ; 101 ; 201 ; 301) selon l'une des revendications précédentes, **caractérisé en ce que**
- la structure spatiale (16 ; 216) du châssis arrière (4 ; 104 ; 204 ; 304) est conçue comme une structure spatiale (16 ; 216) autoportante,
- cette structure spatiale (16 ; 216) étant plus particulièrement conçue de façon à ce que les panneaux sandwich (11 ; 111 ; 211) reliés entre eux forment au moins trois cellules spatiales (18 ; 18a ; 18b ; 18c ; 118 ; 118a ; 118b ; 118c ; 218 ; 218a - 218c) plus particulièrement parallélépipédiques, disposées plus particulièrement symétrique à un axe longitudinal du véhicule (L17), qui sont disposées, dans la direction de déplacement (F17 ; F217), plus particulièrement les unes derrière les autres et juxtaposées,
- un des cellules spatiales (18 ; 18c ; 118 ; 118c ; 218 ; 218c) étant disposée plus particulièrement de façon à ce que le premier support transversal (13 ; 113 ; 213) limitant la cellule spatiale (18 ; 18c ; 118 ; 118c ; 218 ; 218c) est disposé, dans la direction de déplacement (F17 ; F217), avant un emplacement de montage (19) pour des roues arrière (20) et de façon à ce que le deuxième support transversal (13 ; 113 ; 213) limitant la cellule spatiale (18 ; 18c; 118 ; 118c; 218 ; 218c) est disposé, dans la direction de déplacement (F17 ; F217), après l'emplacement de montage (19) pour les roues arrière (20),
- les panneaux sandwich (11 ; 111 ; 211) utilisés pour la structure spatiale (16 ; 216) présentent plus particulièrement une épaisseur (D11) entre 20 mm et 40 mm et de préférence de 25 mm à 35 mm,
- la membrure supérieure (14 ; 114 ; 214) et la membrure inférieure (15 ; 115 ; 215) présentent entre elles plus particulièrement une distance (A14A15) de 350 mm à 450 mm, de préférence de 400 mm à 430 mm et
- les supports longitudinaux (12 ; 112 ; 212) présentent plus particulièrement une longueur (L12) de 2 m à 4 m et de préférence de 3 m à 3,6 m.

4. Châssis de véhicule routier selon l'une des revendications précédentes, **caractérisé en ce que** les moyens de bridage (5 ; 205 ; 305) relient les supports longitudinaux (12 ; 112 ; 212) du châssis arrière (4 ; 104 ; 204 ; 304), qui constituent les organes de liaison (21) du châssis arrière (4 ; 104 ; 204 ; 304), et les supports (22) du châssis avant (3 ; 203 ; 303), qui constituent les organes de liaison (23) du châssis avant (3 ; 203 ; 303).

5. Châssis de véhicule routier selon l'une des revendications précédentes, **caractérisé en ce que** le châssis avant (3 ; 203 ; 303) est conçu comme un châssis métallique (24).

6. Châssis de véhicule routier selon l'une des revendications précédentes, **caractérisé en ce qu'**au moins un organe de liaison (23) du châssis avant (3 ; 203 ; 303) est conçu comme un profilé creux (25, 36) et **en ce qu'**au moins un organe de liaison (21) du châssis arrière (4 ; 104 ; 204 ; 304) est constitué d'un des supports longitudinaux (12 ; 112 ; 212), le support longitudinal (12 ; 112 ; 212) étant relié au profilé creux (25, 36) de façon à ce que le support longitudinal (12 ; 112 ; 212) dépasse dans le profilé creux (25, 26) et est relié, à l'aide des moyens de bridage (5 ; 205 ; 305), avec le profilé creux (25, 26) ou de façon à ce que le support longitudinal (12 ; 112 ; 212) s'appuie à l'extérieur sur le profilé creux (25, 26) et est relié, à l'aide des moyens de bridage (5 ; 205 ; 305), avec le profilé creux (25, 26).

7. Châssis de véhicule routier selon l'une des revendications précédentes, **caractérisé en ce que** le châssis arrière (4 ; 104 ; 204 ; 304) comprend au moins trois et plus particulièrement quatre supports longitudinaux (13 ; 13a -13d), qui traversent le châssis arrière (4 ; 104 ; 204 ; 304).

8. Châssis de véhicule routier selon la revendication 7, **caractérisé en ce qu'**au moins deux et plus particulièrement trois supports longitudinaux (13 ; 13a - 13d ; 113 ; 113a - 113d) présentent chacun un perçage (28 ; 228), de façon à ce que, entre la membrure supérieure (14 ; 114 ; 214) et la membrure inférieure (15 ; 115 ; 215), un tunnel (29) soit formé dans la direction longitudinale du véhicule (F17 ; F217).

9. Châssis de véhicule routier selon l'une des revendications précédentes, **caractérisé en ce que** le moyen de bridage (5 ; 205 ; 305) comprend, pour relier le châssis avant (3 ; 203 ; 303) et le châssis arrière (4 ; 104 ; 204 ; 304), au moins un gousset (KNB), le gousset (KNB) étant relié et plus particulièrement vissé avec le châssis avant (3 ; 203 ; 303) et le châssis arrière (4 ; 104 ; 204 ; 304).

10. Châssis de véhicule routier selon l'une des revendications précédentes, **caractérisé en ce qu'**un chevalet de membrure (31) est relié avec un des supports longitudinaux (12 ; 112 ; 212) et/ou un des supports transversaux (13 ; 113 ; 213) et s'appuie plus particulièrement avec une flèche (32) contre la membrure supérieure (14 ; 114 ; 214).

11. Châssis de véhicule routier selon l'une des revendications précédentes, **caractérisé en ce que** le châssis léger à structure sandwich (10)
- est soit conçu de façon à ce que la membrure supérieure (14 ; 114 ; 214) dépasse, dans la direction de déplacement (F17 ; F217), des deux côtés latéralement, de la membrure inférieure (15 ; 115 ; 215), la membrure supérieure (14 ; 114 ; 214) dépassant latéralement des supports longitudinaux (12 ; 112 ; 212) et
- la membrure inférieure (15 ; 115 ; 215) se terminant latéralement en affleurement avec les supports longitudinaux (12 ; 112 ; 212), plus particulièrement au moins un des supports transversaux (13 ; 113 ; 213) s'étendant exclusivement entre les supports longitudinaux (12 ; 112 ; 212) et présentant plus particulièrement une longueur (L13) de 1,2 m à 1,4 m et de préférence de 1,25 m à 1,35 m ou
- plus particulièrement au moins un des supports transversaux (13 ; 113 ; 213) dépassant des deux côtés des supports longitudinaux (12 ; 112 ; 212) et présentant plus particulièrement une longueur (L13) de 2 m à 2,5 m et de préférence une longueur (L13) de 2,2 m à 2,3 m
- soit conçue de façon à ce que la membrure supérieure (14 ; 114 ; 214) et la membrure inférieure (15 ; 115 ; 215) dépassent des deux côtés latéralement des supports longitudinaux (12 ; 112 ; 212), plus particulièrement au moins un des supports transversaux (13 ; 113 ; 213) dépassant des deux côtés des supports longitudinaux (12 ; 112 ; 212) et présentant plus particulièrement une longueur (L13) de 2 m à 2,5 m, de préférence une longueur (L13) de 2,2 m à 2,3 m.

12. Châssis de véhicule routier selon l'une des revendications précédentes, **caractérisé en ce que** les moyens de bridage (305) comprennent au moins un adaptateur (ADP) qui se trouve entre le châssis avant (303) et le châssis arrière (305).

13. Véhicule routier (17) **caractérisé en ce que** le véhicule routier (17) comprend un châssis de véhicule routier (1 ; 101 ; 201 ; 301) selon au moins l'une des revendications 1 à 11 et **en ce que** le véhicule routier (17) comprend un moteur (33), plus particulièrement un moteur à combustion (34) qui est logé dans le châssis avant (3 ; 203 ; 303) et qui entraîne des roues avant (35) ou des roues avant (35) et des roues arrière (20).

14. Véhicule routier (17) **caractérisé en ce que** le véhicule routier (17) comprend un châssis de véhicule routier (1 ; 101 ; 201 ; 301) selon au moins l'une des revendications 1 à 12 et **en ce que** le véhicule routier comprend un moteur (33), plus particulièrement un moteur à combustion (34) qui est logé dans le châssis arrière (4 ; 104 ; 204 ; 304) et qui entraîne des roues arrière (30) ou des roues arrière (20) et des roues avant (35).

15. Véhicule routier (17) avec un châssis de véhicule routier (1 ; 101 ; 201 ; 301), **caractérisé en ce que** le véhicule routier (17) est conçu selon la revendication 13 ou 14 ou **en ce que** le véhicule routier (17) comprend un châssis de véhicule routier (1 ; 101 ; 201 ; 301) selon au moins une des revendications 1 à 12,
- la membrure supérieure (14 ; 114 ; 214) du châssis arrière (4 ; 104 ; 204 ; 304) formant plus particulièrement une surface de base (36) d'un habitacle (37),
- des groupes d'alimentation (38) et/ou des réservoirs (39) se trouvant plus particulièrement entre la membrure supérieure (14 ; 114 ; 214) et la membrure inférieure (15 ; 115 ; 215), dans des cellules spatiales (18) limitées par les supports longitudinaux (12 ; 112 ; 212) et les supports transversaux (13 ; 113 ; 213),
- au moins une des cellules spatiales (18) étant accessible plus particulièrement par l'intermédiaire d'un perçage (28 ; 228) dans un de deux supports transversaux (13 ; 113 ; 213), qui limitent la cellule spatiale (18),
- au moins une des cellules spatiales (18) étant accessible plus particulièrement par l'intermédiaire d'un perçage (40 ; 240) dans le support longitudinal gauche (12 ; 12a ; 212a) et plus particulièrement par l'intermédiaire d'un perçage (41 ; 241) dans le support longitudinal droit (12 ; 12b),
- la membrure supérieure (14 ; 114 ; 214) et/ou la membrure inférieure (15 ; 115 ; 215) étant conçue plus particulièrement comme un panneau sandwich monobloc (11 ; 111 ; 211), qui dépasse, contre la direction de déplacement (F17 ; F217) des roues arrière (20) du véhicule routier,
- les supports longitudinaux (12 ; 112 ; 212) dépassant plus particulièrement des supports transversaux les plus en avant (13a) et/ou des supports transversaux les plus en arrière (13d), une saillie (UE13a) par rapport au support transversal le plus en avant (13a) étant plus particulièrement d'au moins 20 cm, une saillie (UE13d) par rapport au support transversal le plus en arrière (13d) étant plus particulièrement d'au moins 20 cm.
